# EUROPEAN PATENT SPECIFICATION

(11) **EP 0 783 158 B1**
(45) Date of publication and mention of the grant of the patent: **28.04.2004**
(21) Application number: 97100049.2
(22) Date of filing: 03.01.1997
(51) Int. Cl.: G06K 7/10

(54) **Identification system**
Identifizierungssystem
Système d'identification

(30) Priority: 03.01.1996 US 9569
(43) Date of publication of application: 09.07.1997
(73) Proprietor: TEXAS INSTRUMENTS DEUTSCHLAND GMBH, 85356 Freising (DE)
(72) Inventor: Schürmann, Josef H., 85416 Langenbach (DE); Aslanidis, Konstantin, D-85221 Dachau (DE)
(74) Representative: Degwert, Hartmut, Dipl.-Phys.

(56) References cited:
- US-A- 5 451 958
- US-A- 5 477 215

## Description

### TECHNICAL FIELD OF THE INVENTION

This invention generally relates to an identification system and particularly to a dual standard RF-ID system for receiving half-duplex and full-duplex identification responses.

### BACKGROUND OF THE INVENTION

Many different communication protocols are used in remote RF identification systems today. Some systems use a full duplex communication protocol wherein the interrogator is continuously transmitting an interrogation signal while the transponder in that field is responding. One advantage of this system is that the transponder can be receiving power from the interrogator continuously while it is transmitting its response signal. Another variation uses frequency or phase modulation. Return signals using frequency modulation or phase modulation are quite different from amplitude modulated signals.

Other RF-ID systems use a half-duplex communication protocol wherein the interrogator transmits a powering interrogation signal for a predetermined amount of time and then stops transmitting and listens for a transponder response signal for a predetermined amount of time. Two advantages of this system are that the powering and data transmission phase can be independently optimized and that the interrogation and response signal frequencies can be the same because either the interrogator or the transponder will be transmitting at any given moment, not both. Other advantages are that the transponder signals are stronger and the efficiency is higher which results in less power consumed in the transponder while the interrogation distance is larger.

A reader which can read transponders having different communication standard protocols is known from US-A-5,451,958. The reader comprises a first antenna circuit for transmitting an excitation pulse to charge-up half duplex transponders and immediately initiates the full duplex transponders to respond, a second antenna circuit for receiving a transponder RF frequency response signal, a mixer circuit which mixes the full duplex transponder RF frequency signal and the half duplex transponder RF frequency signal with respective LO frequency signals and yields a predetermined IF frequency signal, an amplifier circuit for amplifying the IF frequency signal and comprising a signal-detect circuit which detects the presence or absence of an FDX (FSK) signal being received, an amplitude limiting circuit for amplitude limiting the IF frequency signal, and a demodulator circuit for demodulation of the IF frequency signal into a data signal.

It is the object of the present invention to provide a further RF-ID system having one reader i.e., interrogator, which may receive a plurality of transponder response signals, wherein the transponders are operating under different communication protocols. Optimally, the system and reader receive different communication protocols including half and full duplex signaling protocols with the least amount of additional components and with a minimum loss of demodulation speed performance.

In accordance with the present invention, a method and apparatus for reading signals from transponders having different communication protocols are provided. The present invention comprises a reader which can read transponders operating in full duplex (FDX) with a frequency shift keyed (FSK), phase shift keyed (PSK) or amplitude shift keyed (ASK) mode or half-duplex (HDX)with a frequency shift keyed (FSK) mode.

According to the present invention, a dual standard RF-ID interrogator is provided which can receive and recognize ASK, PSK, and FSK transponder signals. The interrogator comprises the features of claim 1.

According to a preferred embodiment, a filter circuit may be operatively connected to the mixer/amplifier circuit for base band filtering the frequency response signals. Also, an amplifier/limiter circuit may be operatively connected to the filter circuit for selectively amplifying and limiting the frequency response signals. A LO oscillator circuit may provide a LO frequency signal. Further, a controller may be connected to operate a switching function whereby the mixer/amplifier circuit mixes the HDX(FSK) transponder RF frequency response signal with the LO frequency signal such that the resulting frequency signal is about the second frequency. The demodulator circuit may comprise a zero detector circuit for detecting a number of zero crossings in a predetermined amount of time and a timer circuit for defining the predetermined amount of time for the zero detector circuit. The zero detector circuit generates a train of pulses having different amplitudes depending on the number of detected zero crossings. A monoflop may then be provided for shaping the pulses into well defined pulses. An integrator may be provided for integrating the well-defined pulses and for transforming the pulses into two different D.C. levels. A Schmitt Trigger circuit distinguishes between the two D.C. levels and yields either a high or low data bit for output. Any other FSK, ASK, or PSK demodulator circuit may also be used.

According to another aspect of the present invention, in a dual standard RF-ID system, a method for receiving and recognizing PSK and FSK transponder signals may comprise the steps defined in claim 13.

The present invention comprises various technical advantages over conventional RF-ID readers.

### BRIEF DESCRIPTION OF THE DRAWINGS

For a more complete understanding of the present invention and the advantages thereof, reference is now made to the following description taken in conjunction with the accompanying drawings, wherein like reference numerals represent like parts, in which:
Fig. 1 is a schematic diagram of a powering portion of an interrogator in a dual standard RF-ID system according to an embodiment of the present invention;
Fig. 2 is a schematic diagram of a receiver in a dual standard HDX/FDX transponder system according to one embodiment of the present invention;
Fig. 3 is a schematic illustrating the frequency signals used in one embodiment according to the present invention;
Fig. 4. is a schematic diagram of a receiver in a dual standard HDX/FDX transponder system according to another embodiment of the present invention; and
Fig. 5 is a schematic of a demodulator circuit according to one embodiment of the present invention.

### DETAILED DESCRIPTION OF THE INVENTION

Half-duplex (HDX) and full duplex (FDX) transponders are typically tuned to and respond to an excitation frequency such as a frequency of 134.2 KHz, for example. HDX and FDX transponders may respond, however, at different frequencies or may respond at the excitation frequency. Full duplex transponders begin transmitting identification code response signals back to an interrogator instantaneously. Half-duplex transponders charge-up during the exciter signal and when the exciter signal has terminated, the half-duplex transponders transmit their own modulated identification code response signals.

Full-duplex transponders may retransmit the identification codes at one half of the exciter frequency, for example. For a frequency of about 134.2 KHz, FDX transponders may typically retransmit at about 67.1 KHz. To receive signals from both an FDX transponder and an HDX transponder, which typically retransmits at the exciter frequency, for example, about 134.2 KHz, the present invention provides a receiver for both modes of operation.

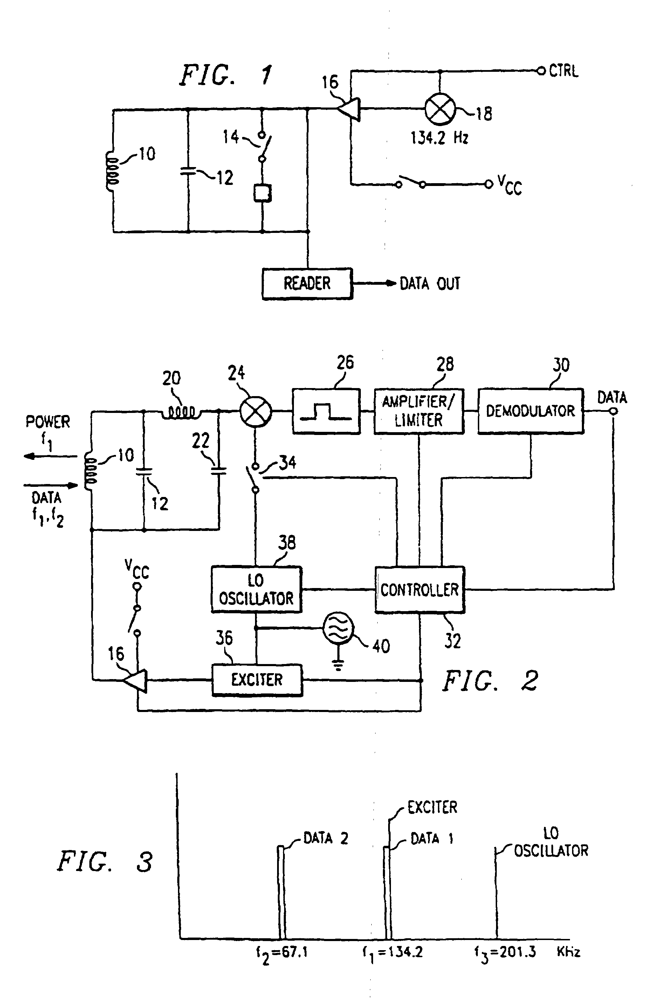

In a more detailed description of one embodiment of the invention, a power portion of an interrogator transmits an interrogation/exciter power signal of 134.2 KHz to power up the transponders. Components of the power portion that may be used for transmission of the interrogation signal are shown in Fig. 1. A control input triggers RF source 18 to produce a first frequency signal, f1, of abcut 134.2 KHz. The interrogation/exciter power signal at about 134.2 KHz is amplified by amplifier 16 and resonates the antenna resonant circuit comprised of capacitor 12 and coil 10. The interrogation/exciter power signal is transmitted via antenna coil 10. If the resonant circuit 10,12 has a high "Q," upon termination of the exciter signal, a switch 14 may be closed to damp the exciter signal and to immediately stop transmission of the exciter signal. If the resonant circuit 10,12 has a low "Q," the exciter signal may not be damped and therefore switch 14 may be left open or may be omitted. The exciter signal charges-up HDX(FSK) transponders and immediately initiates FDX transponders to respond. The details of the reader portion of the receiver are described in detail below.

Components of the interrogator for reception of the response signals from the transponders are shown schematically in Fig. 2. The Fig. 2 reader receiver section is able to receive HDX type transponder identification code response signals as well as FDX type transponder identification code response signals operating at different frequencies. In order to do so, the resonant circuit preferably further comprises a second pole. The second pole may be added with resonance components connected to resonant circuit 10,12. Fig. 2 depicts an embodiment of a resonant circuit having two poles comprising a second coil 20 and a second capacitor 22. Coil 10 and capacitor 12 preferably comprise a first resonant component which operates at a high Q to power in the HDX case. Second coil 20 and second capacitor 22 comprise a second resonant component which operate at the frequency of the response signal from the FDX transponder, for example, at 67.1 KHz frequency.

The reader receiver section also comprises a mixer/amplifier circuit 24, a filter circuit 26, an amplifier/limiter circuit 28, a demodulator circuit 30, a controller 32, a switch 34, an exciter signal provider 36, a LO signal provider 38, and an oscillator 40. Filter circuit 26 may comprise an L-C circuit or other device tuned to the frequency of the FDX transponder, f2, of about 67.1 KHz, for example, which is also equal to the converted HDX frequency signal. LO signal provider 38 may provide a third frequency, f3, which is equal to the sum of the exciter frequency, f1, plus the FDX frequency f2. f3 may, for example, then equal about 201.3 KHz as depicted in Fig. 3. Oscillator 40 may provide a signal having a frequency of about 6.442 MHz. LO signal provider 38 and exciter signal provider 36 may be derived from oscillator 40 by using a divider ratio of about 32 and 48, respectively, to derive the 201.3 KHz and 134.2 KHz signals.

When an FDX signal is received, the data is provided at about f2 (about 67.1 KHz). Because the second pole of the antenna circuit is tuned to a frequency of f2 (about 67.1 KHz), switch 34 is open under control of controller 32 so that mixer/amplifier circuit 24 operates in a linear amplifier mode. The f2 signal is then amplified and limited by amplifier/limiter circuit 28 and then demodulated by demodulator circuit 30 to extract data. When a HDX signal is received, that data is provided at about f1 (about 134.2 KHz). Therefore, switch 34 is closed by controller 32 and the LO frequency of about f3 (about 201.3 KHz) is mixed with the incoming signal at about f1 (about 134.2 KHz) down to a frequency of about f2 (about 67.1 KHz). The mixed down signal may then be passed through amplifier/limiter circuit 28 and demodulator circuit 30 to extract the data received from HDX transponders. By permitting both signals to pass through mixer/amplifier circuit 24, this circuit can compensate for differences in signal strength of the two different transponder signals.

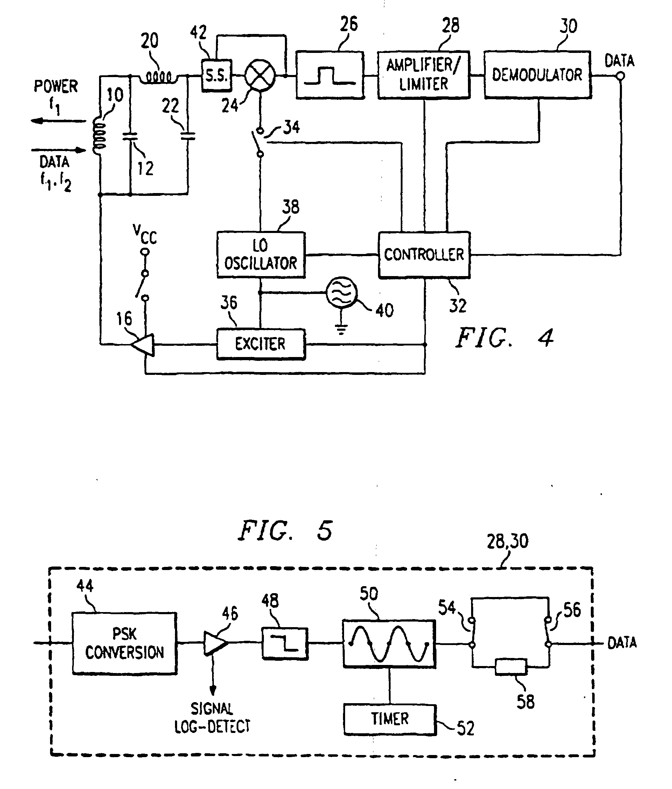

Fig. 4 depicts another embodiment of the present invention. Like references to Fig. 3 represent like elements. According to this embodiment, a signal splitter 42 is provided between the resonant circuit and mixer/amplifier circuit 24. Signal splitter 42 splits incoming signals based on the input frequency. If signal at f2 (67.1 KHz) is received, signal splitter 42 bypasses mixer/amplifier circuit 24 and injects the signal into the circuit prior to filter circuit 26. If a signal at f1 (134.2 KHz) is received, signal splitter 42 allows the signal to pass through to mixer/amplifier circuit 24.

Demodulator circuit 30 may comprise a conventional FSK/ASK/PSK demodulator, for example. In order to demodulate the phase modulated signals (PSK signals) with the inherent instantaneous frequency changes, the base band PSK signal may be passed through a PSK conversion circuit. For example, this PSK conversion circuit may be provided by D-type flip flops or bistables. Also, the PSK signal may be switched from a 90° phase shift to a reference signal derived from the exciter during the exciter on-time for FDX. These converted signals may then be passed to a conventional FSK demodulator to produce data. The data may then in turn be provided to controller 32 for further processing.

Fig. 5 depicts one embodiment of a circuit of amplifier/limiter circuit 28 and demodulator circuit 30 according to the present invention. This circuit 28, 30 may comprise a PSK conversion circuit 44, a signal log-detect circuit 46, a limiter/comparator 48, a zero detector circuit 50, a timer circuit 52, and a biphase decoder circuit 58 having switches 54 and 56. PSK conversion circuit 44 converts PSK signals prior to FSK demodulation.

Signal log-detect circuit 46 selectively amplifies the base-band signals provided by filter circuit 26 and PSK conversion circuit 44. Signal log-detect circuit 46 also provides a carrier signal detect output which facilitates an adaptive receiver in which upon the absence of a signal, the controller can institute much shorter powering pulse durations from the exciter 36. In this manner, ID sequence duration is minimized with maximum efficiency. The amplified signals from signal log-detect circuit 46 are then amplitude limited by limiter/comparators circuit 48.

After amplification and limitation, the signal may be passed to zero detector circuit 50 combined with a timer circuit 52. Zero detector circuit 50 and timer circuit 52 function to demodulate the baseband signals to determine whether the low or high bit FSK frequency is being sent. Timer circuit 52 may provide a signal every predetermined amount of time to zero detector circuit 50. For example, timer circuit 52 may provide a signal every microsecond or millisecond.

An easily integratable ASIC type receiver may be used to perform the demodulation. The demodulation may be performed by determining the number of zero crossings in a given time duration via zero detector circuit 50 wherein the time elapsed between one zero crossing to another zero crossing are different for different frequencies, i.e., about 62.1 KHz and about 67.1 KHz, and therefore the number of zero crossings in the same amount of time are different for different frequencies. Zero detector circuit 50 then outputs a train of pulses of constant width and various periods, depending on how many zero crossings were detected, which subsequently is shaped by a monoflop into a well defined pulse. This well defined pulse is then integrated through an integrator which yields different D.C. levels. A Schmitt Trigger can be used to distinguish between the two D.C. levels and yield either the high or low FSK bit. The demodulation can also be performed by any conventional demodulator including a Phase-Lock Loop (PLL) or product detector. Further, digital signal processing sampling or envelope detection techniques may also be used. DSP is simple and feasible because the signals are provided at low IF which results in a much lower cost of implementation.

Further, a bi-phase modulation circuit 58 comprising switches 54 and 56 may be provided because most FDX signals use a biphase encoded data signal. Bi-phase modulation circuit 58 operates to decode biphase signal to non-return to zero (NRZ) signals. Switches 52 and 54 switch from the bi-phase modulation circuit path 58 to the non-return to zero path upon the termination of the exciter signal which allows HDX data signals to pass straight through the NRZ path to the data output port.

As discussed above, when the HDX signal is received at a frequency of about f1 (about 134.2 KHz), it is mixed down to a frequency of about f2 (about 67.1 KHz) for further processing. To do so, controller 32 closes switch 34 and LO signal provider 38 provides a signal to mixer 24 which heterodynes the HDX(FSK) signal, which has a frequency of f1, down to a frequency of f2 for further processing. In order to determine when a HDX signal is being received, signal log-detect circuit 46 may detect the absence of an FDX signal and thus the presence of the HDX signal. The detection signal of signal log-detect circuit 46 may be directly passed to controller 30 so that controller 30 may close switch 34 such that mixer/amplifier circuit 24 mixes the incoming HDX transponder frequency response signal with the LO oscillator frequency signal from f1 down to f2. Further, upon the signal-log detector detecting the absence of the FDX signal, the receiver is ready to receive the HDX transponder signal. During the duration that the exciter frequency is being transmitted, the half-duplex transponders are charging up, preparing to respond to the termination of the exciter pulse.
At the end of the exciter duration, switch 14 (Fig. 1) is closed such that the residual resonance of the antenna circuit 10,12 is greatly damped. The significant drop in power level of the exciter signal is detected by the half duplex transponders and therefore, they begin to transmit and the full duplex transponders cease transmitting. The HDX transponders store the energy from the exciter signal to power the generation of a new carrier signal at the same frequency as the exciter signal, for example, about f1 (about 134.2 KHz). A second FSK frequency is generated such as at about 124.2 KHz, for example such that the transponder identification code is FSK modulated between about 134.2 KHz and about 124.2 KHz. The HDX(FSK) signals are then processed as described above. Then the controller opens switch 14 again to initiate another cycle of interrogation.

According to the present invention, an integrated FDX/HDX receiving system has been provided without use of parallel receivers and hardware intensive solutions. As such, a low cost, high functionality system without duplication of receiver circuits has been provided which may be used with existing systems.

## Claims

1. A dual standard RF-ID interrogator which can receive and recognize transponder signals comprising:
an antenna circuit (10, 12, 20, 22) for transmitting an excitation signal to charge-up half duplex (HDX) transponders and immediately initiate full duplex (FDX) transponders to respond and for receiving a frequency response signal from the half duplex transponders having a first frequency and a frequency response signal from the full duplex transponders having a second frequency;
a mixer/amplifier circuit (24) operatively connected to the antenna circuit for mixing the frequency response signal received from the half duplex transponders down to the second frequency; and
a demodulator circuit (30) operatively connected to the mixer/amplifier circuit (24) for demodulating the frequency response signals received from the full duplex transponders and the mixer/amplifier circuit (24) into a data signal.

2. The interrogator of Claim 1 further comprising:
a detector circuit (46) operatively connected to the mixer/amplifier circuit (24) for detecting the full duplex signal to place the mixer/amplifier circuit (24) in linear amplification mode.

3. The interrogator of Claim 2 further comprising:
an oscillator circuit (38, 40) for providing an LO frequency signal;
switching means (34) connected between the oscillator circuit (38, 40) and the mixer circuit (24); and
a controller (32) operatively connected to the detector circuit (46) for actuating the switching means (34) such that the mixer/amplifier circuit (24) mixes the frequency response signal of the half duplex transponder from the first frequency down to the second frequency when a full duplex signal is not detected by the detector circuit (46).

4. The interrogator of any preceding Claim further comprising:
a splitter circuit (42) operatively connected to the antenna circuit and the mixer circuit (24), for passing the frequency response signals from the half duplex transponder to the mixer circuit (24) and the frequency response signals from the full duplex transponders to the demodulator circuit (30).

5. The interrogator of any preceding claim, wherein the demodulator circuit (30) is operable to produce a train of pulses having different amplitudes and constant widths and comprises:
a zero detector circuit (50) for detecting a number of zero crossings in a predetermined amount of time;
a timer circuit (52) for defining the predetermined amount of time for the zero detector circuit (50); and
wherein the zero detector circuit (50) produces a train of pulses having constant widths and different amplitudes depending on the number of detected zero crossings.

6. The interrogator of Claim 5, wherein the demodulator circuit (30) further comprises:
a monoflop for shaping the pulses into well defined pulses;
an integrator for integrating the well-defined pulses and for transforming the pulses into two different D.C. levels; and
a Schmitt Trigger circuit for distinguishing between the two D.C. levels and yielding either a high or low bit.

7. The interrogator of any preceding claim wherein the demodulator circuit (30) comprises a biphase decoder circuit (58).

8. The interrogator of any preceding claim, wherein the second frequency is equal to one half of the first frequency.

9. The interrogator of any preceding claim, wherein a third frequency is equal to the sum of the first frequency and the second frequency.

10. The interrogator of any preceding claim further comprising: a filter circuit (26) operatively connected to the mixer/amplifier circuit (24) for base band filtering the frequency response signals.

11. The interrogator of any preceding claim further comprising:
an amplifier/limiter circuit (28) operatively connected between the mixer/amplifier circuit (24) and the demodulator circuit (30) for selectively amplifying and limiting the frequency response signals.

12. The interrogator of any preceding claim further comprising:
an exciter source (36, 40);
a controller (32) for initiating the excitation signal from the exciter source; and
a signal log-detect circuit (46) operatively connected to the mixer/amplifier circuit (24) for providing a carrier detect output to the controller (32) such that the controller (32) may initiate shorter powering pulse durations from the exciter (36).

13. A method for operating a dual standard RF-ID interrogator comprising the steps of:
transmitting an excitation signal to charge-up half duplex transponders and immediately initiate full duplex transponders to respond;
receiving a frequency response signal from the half duplex transponder having a first frequency and a frequency response signal from the full duplex transponder having a second frequency;
detecting the frequency response signal received from the full duplex transponder;
mixing the frequency response signal from the half duplex transponder down to the second frequency if the response signal from the full duplex transponder is not detected; and
demodulating the frequency response signals from the full duplex transponder and the mixing step into a data signal.

14. The method of Claim 13 further comprising the step of amplifying the frequency response signal from the full duplex transponder.

15. The method of Claim 13 or Claim 14, further comprising the step of base band filtering the frequency response signals.

16. The method of any of Claims 13 to 15 further comprising the step of selectively amplifying and limiting the frequency response signals.

## Patentansprüche

1. Duales Standard-HF-ID-Abfragegerät, das Transpondersignale empfangen und erkennen kann, mit:
einer Antennenschaltung (10, 12, 20, 22) zum Senden eines Erregungssignals, um Halbduplex-Transponder (HDX-Transponder) aufzuladen und um Vollduplex-Transponder (FDX-Transponder) sofort zum Antworten zu veranlassen, und zum Empfangen eines Antwortfrequenzsignals von den Halbduplex-Transpondern, das eine erste Frequenz besitzt, und eines Antwortfrequenzsignals von den Vollduplex-Transpondern, das eine zweite Frequenz besitzt;
einer Mischer/Verstärker-Schaltung (24), die mit der Antennenschaltung funktional verbunden ist, um das von den Halbduplex-Transpondern empfangene Antwortfrequenzsignal auf die zweite Frequenz herabzumischen; und
einer Demodulatorschaltung (30), die mit der Mischer/Verstärker-Schaltung (24) funktional verbunden ist, um die von den Vollduplex-Transpondem und von der Mischer/Verstärker-Schaltung (24) empfangenen Antwortfrequenzsignale in ein Datensignal zu demodulieren.

2. Abfragegerät nach Anspruch 1, ferner mit:
einer Detektorschaltung (46), die mit der Mischer/Verstärker-Schaltung (24) funktional verbunden ist, um das Vollduplexsignal zu erfassen, um die Mischer/Verstärker-Schaltung (24) in eine lineare Verstärkungsbetriebsart zu versetzen.

3. Abfragegerät nach Anspruch 2, ferner mit:
einer Oszillatorschaltung (38, 40), die ein LO-Frequenzsignal bereitstellt;
Schaltmitteln (34), die zwischen die Oszillatorschaltung (38, 40) und die Mischerschaltung (24) geschaltet sind; und
einer Steuereinheit (32), die mit der Detektorschaltung (46) funktional verbunden ist, um die Schaltmittel (34) in der Weise zu betätigen, dass die Mischer/Verstärker-Schaltung (24) das Antwortfrequenzsignal des Halbduplex-Transponders von der ersten Frequenz abwärts zur zweiten Frequenz mischt, wenn von der Detektorschaltung (46) kein Vollduplexsignal erfasst wird.

4. Abfragegerät nach einem vorhergehenden Anspruch, ferner mit:
einer Verteilerschaltung (42), die mit der Antennenschaltung und mit der Mischerschaltung (24) funktional verbunden ist, um die Antwortfrequenzsignale von dem Halbduplex-Transponder an die Mischerschaltung (24) zu leiten und um die Antwortfrequenzsignale von den Vollduplextranspondern an die Demodulatorschaltung (30) zu leiten.

5. Abfragegerät nach einem vorhergehenden Anspruch, bei dem die Demodulatorschaltung (30) so betreibbar ist, dass sie einen Impulszug mit Impulsen unterschiedlicher Amplitude und konstanter Breite erzeugt, und umfasst:
eine Nulldurchgang-Detektorschaltung (50), die die Anzahl der Nulldurchgänge in einer vorgegebenen Zeitspanne erfasst;
eine Zeitgeberschaltung (52), die die vorgegebene Zeitspanne für die Nulldurchgang-Detektorschaltung (50) definiert; und
wobei die Nulldurchgang-Detektorschaltung (50) einen Zug von Impulsen erzeugt, die konstante Breiten und je nach Anzahl der erfassten Nulldurchgänge unterschiedliche Amplituden besitzen.

6. Abfragegerät nach Anspruch 5, bei dem die Demodulatorschaltung (30) ferner umfasst:
ein Monoflop zum Formen der Impulse in wohl definierte Impulse;
einen Integrator, der die wohl definierten Impulse integriert und die Impulse in zwei unterschiedliche Gleichstrompegel transformiert; und
eine Schmitt-Trigger-Schaltung, die zwischen den zwei Gleichstrompegeln unterscheidet und entweder ein hohes oder ein niedriges Bit ausgibt.

7. Abfragegerät nach einem vorhergehenden Anspruch, bei dem die Demodulatorschaltung (30) eine Zweiphasen-Decodiererschaltung (58) umfasst.

8. Abfragegerät nach einem vorhergehenden Anspruch, bei dem die zweite Frequenz gleich der Hälfte der ersten Frequenz ist.

9. Abfragegerät nach einem vorhergehenden Anspruch, bei dem eine dritte Frequenz gleich der Summe aus der ersten Frequenz und aus der zweiten Frequenz ist.

10. Abfragegerät nach einem vorhergehenden Anspruch, ferner mit: einer Filterschaltung (26), die mit der Mischer/Verstärker-Schaltung (24) funktional verbunden ist, um für die Antwortfrequenzsignale eine Grundbandfilterung auszuführen.

11. Abfragegerät nach einem vorhergehenden Anspruch, ferner mit:
einer Verstärker/Begrenzer-Schaltung (28), die zwischen die Mischer/Verstärker-Schaltung (24) und die Demodulatorschaltung (30) funktional geschaltet ist, um die Antwortfrequenzsignale wahlweise zu verstärken und zu begrenzen.

12. Abfragegerät nach einem vorhergehenden Anspruch, ferner mit:
einer Erregerquelle (36, 40);
einer Steuereinheit (32), die das Erregungssignal von der Erregerquelle auslöst; und
einer Signal-Log-Erfassungsschaltung (46), die mit der Mischer/Verstärker-Schaltung (24) funktional verbunden ist, um für die Steuereinheit (32) eine Trägererfassungsausgabe zu schaffen, derart, dass die Steuereinheit (32) kürzere Leistungsversorgungsimpulsdauern vom Erreger (36) auslösen kann.

13. Verfahren zum Betreiben eines dualen Standard-HF-ID-Abfragegeräts, das die folgenden Schritte umfasst:
Senden eines Erregungssignals, um Halbduplex-Transponder aufzuladen und um Vollduplex-Transponder sofort zum Antwort zu veranlassen;
Empfangen eines Antwortfrequenzsignals von dem Halbduplex-Transponder, das eine erste Frequenz besitzt, und eines Antwortfrequenzsignals von dem Vollduplex-Transponder, das eine zweite Frequenz besitzt;
Erfassen des Antwortfrequenzsignals, das von dem Vollduplex-Transponder empfangen wird;
Mischen des Antwortfrequenzsignals von dem Halbduplex-Transponder abwärts auf die zweite Frequenz, falls von dem Vollduplex-Transponder kein Antwortsignal erfasst wird; und
Demodulieren der Antwortfrequenzsignale von dem Vollduplex-Transponder und von dem Mischungsschritt in ein Datensignal.

14. Verfahren nach Anspruch 13, das ferner den Schritt umfasst, bei dem das Antwortfrequenzsignal von dem Vollduplex-Transponder verstärkt wird.

15. Verfahren nach Anspruch 13 oder Anspruch 14, das ferner den Schritt umfasst, bei dem für die Antwortfrequenzsignale eine Grundbandfilterung ausgeführt wird.

16. Verfahren nach einem der Ansprüche 13 bis 15, das ferner den Schritt umfasst, bei dem die Antwortfrequenzsignale wahlweise verstärkt und begrenzt werden.

## Revendications

1. Interrogateur RF-ID à double norme pouvant recevoir et reconnaître des signaux de transpondeur et comprenant :
- un circuit d'antenne (10, 12, 20, 22) permettant de transmettre un signal d'excitation vers des transpondeurs à semi-duplex de charge (HDX) et d'initier immédiatement une réponse de transpondeurs à duplex intégral (FDX), et permettant de recevoir un signal de réponse de fréquence des transpondeurs à semi-duplex ayant une première fréquence ainsi qu'un signal de réponse de fréquence des transpondeurs à duplex intégral ayant une seconde fréquence ;
- un circuit mélangeur/amplificateur (24) connecté fonctionnellement au circuit d'antenne afin de mélanger le signal de réponse de fréquence reçu des transpondeurs à semi-duplex vers le bas et vers la seconde fréquence ; et
- un circuit démodulateur (30) connecté fonctionnellement au circuit mélangeur/amplificateur (24) afin de démoduler les signaux de réponse de fréquence reçus des transpondeurs à duplex intégral et du circuit mélangeur/amplificateur (24) en un signal de données.

2. Interrogateur, selon la revendication 1, comprenant en outre :
- un circuit détecteur (46) connecté fonctionnellement au circuit mélangeur/amplificateur (24) afin de détecter le signal de duplex intégral et de placer le circuit mélangeur/amplificateur (24) en mode d'amplification linéaire.

3. Interrogateur, selon la revendication 2, comprenant en outre :
- un circuit oscillateur (38, 40) permettant de fournir un signal basse fréquence ;
- des moyens de commutation (34) connecté entre le circuit oscillateur (38, 40) et le circuit mélangeur (24) ; et
- une unité de commande (32) connectée fonctionnellement au circuit détecteur (46) afin d'actionner les moyens de commutation (34) de sorte que le circuit mélangeur/amplificateur (24) mélange le signal de réponse de fréquence du transpondeur à semi-duplex depuis la première fréquence vers le bas et vers la seconde fréquence lorsqu'un signal de duplex intégral n'est pas détecté par le circuit détecteur (46).

4. Interrogateur, selon l'une quelconque des revendications précédentes, comprenant en outre :
- un circuit répartiteur (42) connecté fonctionnellement au circuit d'antenne et au circuit mélangeur (24) afin de faire passer les signaux de réponse de fréquence du transpondeur à semi-duplex vers le circuit mélangeur (24) et de faire passer les signaux de réponse de fréquence des transpondeurs à duplex intégral vers le circuit démodulateur (30).

5. Interrogateur, selon l'une quelconque des revendications précédentes, dans lequel le circuit démodulateur (30) peut être actionné afin de produire un train d'impulsions ayant des amplitudes différentes et des largeurs constantes, et comprend :
- un circuit détecteur de zéro (50) permettant de détecter un nombre de passages à zéro pendant une durée prédéterminée ;
- un circuit minuteur (52) permettant de déterminer la durée prédéterminée pour le circuit détecteur de zéro (50) ; et
- dans lequel le circuit détecteur de zéro (50) produit un train d'impulsions ayant des largeurs constantes et des amplitudes différentes en fonction du nombre de passages à zéro détectés.

6. Interrogateur, selon la revendication 5, dans lequel le circuit démodulateur (30) comprend en outre :
- une unité monostable permettant de mettre les impulsions sous forme d'impulsions bien définies ;
- un intégrateur permettant d'intégrer les impulsions bien définies et de transformer les impulsions en deux niveaux de CC différents ; et
- un circuit à bascule de Schmitt permettant d'effectuer la distinction entre les deux niveaux de CC et de fournir un bit élevé ou un bit faible.

7. Interrogateur, selon l'une quelconque des revendications précédentes, dans lequel le circuit démodulateur (30) comprend un circuit décodeur biphasé (58).

8. Interrogateur, selon l'une quelconque des revendications précédentes, dans lequel la seconde fréquence est à la moitié de la première fréquence.

9. Interrogateur, selon l'une quelconque des revendications précédentes, dans lequel une troisième fréquence est égale à la somme de la première fréquence et de la deuxième fréquence.

10. Interrogateur, selon l'une quelconque des revendications précédentes, comprenant en outre un circuit filtre (26) connecté fonctionnellement au circuit mélangeur/amplificateur (24) pour filtrer en bande de base les signaux de réponse de fréquence.

11. Interrogateur, selon l'une quelconque des revendications précédentes, comprenant en outre :
- un circuit amplificateur/limiteur (28) connecté fonctionnellement entre le circuit mélangeur/amplificateur (24) et le circuit démodulateur (30) afin d'amplifier et de limiter sélectivement les signaux de réponse de fréquence.

12. Interrogateur, selon l'une quelconque des revendications précédentes, comprenant en outre :
- une source de type excitateur (36, 40) ;
- une unité de commande (32) permettant de lancer le signal d'excitation depuis la source de type excitateur ; et
- un circuit de détection d'enregistrement de signal (46) connecté fonctionnellement au circuit mélangeur/amplificateur (24) afin de fournir une sortie de détection de porteuse à l'unité de commande (32) de sorte que l'unité de commande (32) puisse émettre des durées d'impulsion de puissance plus courtes depuis l'excitateur (36).

13. Procédé de fonctionnement d'un interrogateur RF-ID à double norme comprenant les étapes suivantes :
- émettre un signal d'excitation afin de charger les transpondeurs à semi-duplex et immédiatement déclencher une réponse des transpondeurs à duplex intégral ;
- recevoir un signal de réponse de fréquence du transpondeur à semi-duplex ayant une première fréquence, ainsi qu'un signal de réponse de fréquence du transpondeur à duplex intégral ayant une seconde fréquence ;
- détecter le signal de réponse de fréquence reçu du transpondeur à duplex intégral ;
- mélanger le signal de réponse de fréquence du transpondeur à semi-duplex vers le bas et vers la seconde fréquence si le signal de réponse du transpondeur à duplex intégral n'est pas détecté ; et
- démoduler les signaux de réponse de signal du transpondeur à duplex intégral et de l'étape de mélange en un signal de données.

14. Procédé, selon la revendication 13, comprenant en outre une étape consistant à amplifier le signal de réponse de fréquence du transpondeur à duplex intégral.

15. Procédé, selon la revendication 13 ou la revendication 14, comprenant en outre une étape consistant à filtrer en bande de base les signaux de réponse de fréquence.

16. Procédé, selon l'une quelconque des revendications 13 à 15, comprenant en outre une étape consistant à amplifier et limiter sélectivement les signaux de réponse de fréquence.
